# EUROPEAN PATENT SPECIFICATION

(11) **EP 1 703 802 B1**
(45) Date of publication and mention of the grant of the patent: **08.09.2010**
(21) Application number: 03779777.6
(22) Date of filing: 30.12.2003
(51) Int. Cl.: A23G 4/00

(54) **COMPRESSED BIODEGRADABLE CHEWING GUM**
KOMPRIMIERBARER BIOLOGISCH ABBAUBARER KAUGUMMI
CHEWING-GUM COMPRIME BIODEGRADABLE

(43) Date of publication of application: 27.09.2006
(73) Proprietor: Gumlink A/S, 7100 Vejle (DK)
(72) Inventor: WITTORFF, Helle, DK-7120 Vejle Øst (DK)
(74) Representative: Olesen, Kaj
(86) International application number: PCT/DK2003/000941
(87) International publication number: WO 2005/063038

(56) References cited:
- EP-A- 0 151 344
- US-A- 3 262 784
- US-A- 4 737 366
- US-A- 5 672 367

## Description

### Field of the invention

The present invention relates to chewing gum granules and chewing gum made on the basis of such chewing gum granules.

### Background of the invention

Several different processes for manufacturing of chewing gum are known within the art. The different processes may be overall categorized in basically two different processes; that is chewing gum mechanically mixed on the basis of a gum base compound or chewing gum compressed on the basis of more or less discrete gum base particles. The first type of chewing gum generally benefits from a very comfortable texture, among several different parameters, most likely due to the mechanically mixing of the polymers and for example the flavors. One disadvantage of such type of process and chewing gum is, however, that the different ingredients, such as encapsulated flavor, active ingredients, etc. may be more or less destroyed or degraded by the mixing process.

The second type of chewing gum generally benefits from a relatively gentle handling of vulnerable additives, such as the above-mentioned flavors or active ingredients. One disadvantage of such type of chewing gum is, however, that the resulting chewing gum tablet may typically disintegrate too easily, especially during the initial chew of the gum.

Different proposals in order to obtain compressed chewing gum have been made in the prior art. Typically, such techniques are directed to adaptation of the manufacturing process. WO 03/011045 discloses a technique where the sticking or adhering of the chewing gum mixture to the tableting process equipment is dealt with by controlling the size of the mixture granules.

EP 0151344 discloses tableted chewing gum compositions comprising a blend of chewing gum granules and compression aid. The chewing gum granules comprise gum base, grinding aid, sweetener, etc. The gum base comprises 14% - 50% of the chewing gum, and the gum base polymers are rubbers, elastomers and elastomer solvents well-known within the art.

US 4,161,544 relates to a process for making a pourable-non-caking material for chewing gum, and moreover relates to compressed chewing gum made from this material. Gum base of commercial quality is mixed with chewing gum ingredients to form a chewing gum mixture, which is disintegrated to a powder and compressed to chewing gum.

A problem related to the prior art in general is that chewing gum residues are quite annoying, both with respect to environmental prospects but also with respect to chewing gum lumps, which are not properly disposed, etc.

A further problem related to compressed chewing gum is that the applied granules must inherit properties so that they are mechanically stable when compressed, thereby avoiding premature crumbling of the tablet.

### Summary of the invention

The present invention relates to gum base granules comprising at least one biodegradable gum base polymer, wherein the gum base has a water content of less than 5.0% by weight of the gum base.

According to an embodiment of the invention, a mechanically stable compressed chewing gum tablet has been obtained by applying at least one biodegradable polymer as a part of the gum base of the compressed chewing gum tablet.

Thus, experiments have shown that a compressed chewing gum tablet featuring improved mechanical stability may be obtained by applying biodegradable polymers partly or solely as the gum base forming polymer matrix.

Moreover, according to an embodiment of the invention, it has been established that a tablet formed according to the invention is relatively stable when compared to conventional compressed chewing gum tablets on the basis of non-degradable polymers prior to the initial intended chewing.

It should be stressed that although the present invention focuses primarily on a few in particular advantageous groups of biodegradable polymers, the present invention applies generally to biodegradable polymers in the sense that the surprising effect of obtaining a mechanically stable compressed tablet compared to conventionally mixed chewing gum applies generally in spite of pre-chew degradation.

In an embodiment of the invention, said gum base comprises substantially solely at least one biodegradable polymer.

According to an embodiment of the invention, a gum base is advantageously made solely on the basis of one or more biodegradable polymers. Again, experiments have shown that such gum base is advantageously applied on the basis of gum base granules.

In an embodiment of the invention, at least one of said biodegradable polymers comprises polyester produced through reaction of at least one alcohol or derivative thereof and at least one acid or derivative thereof.

According to a preferred embodiment of the invention, at least one of the polymers is produced through reaction of at least one alcohol and at least one acid. This type of polymer features advantageous properties when applied in chewing gum or gum base, both with respect to processing and the finally obtained texture.

In an embodiment of the invention, at least one of said biodegradable elastomers comprises said polyester obtained by polymerization of at least one cyclic ester.

In an embodiment of the invention, at least one of said biodegradable elastomer plasticizers comprises said polyester obtained by polymerization of at least one cyclic ester.

In a further and preferred embodiment of the invention, said chewing gum comprises at least one elastomer plasticizer comprising at least one of said polyesters obtained by polymerization of at least one cyclic ester and at least one elastomer comprising at least one of said polyesters produced through reaction of at least one alcohol or derivative thereof and at least one acid or derivative thereof.

An advantage of mixing the two types of polymers is that the high degree of degradability offered by the biodegradable polymers applied as elastomer plasticizers may be combined with advantageous properties of the biodegradable elastomer with respect to robustness with respect to added softeners, texture, release and processability.

In an embodiment of the invention, the gum base has a water content of less than 5.0%, preferably less than 1.5% by weight of the gum base.

It is typically preferred to keep the moisture content low when dealing with biodegradable polymers. However, according to the invention, as the use of compression techniques delays initial pre-chew degradation, higher moisture content is facilitated in the compressed chewing gum when compared with traditionally mixed biodegradable chewing gum. In other words it

In an embodiment of the invention, the gum base has a water content of less than 1.0%, preferably substantially 0% by weight of the gum base.

In an embodiment of the invention, the size of the gum base granules are within the range of 0.01 mm · 0.0 1 mm to 2mm . 2mm, preferably within the range of 0.1mm· 0.1mm to 1.0mm · 1.0mm.

In an embodiment of the invention, at least one biodegradable polymer constitutes an amount of about 1 % to about 100% by weight of the gum base.

In an embodiment of the invention, said granulated gum base comprising at least one high molecular weight elastomeric biodegradable polymer in an amount of about 0% to about 75% by weight of said gum base.

In an embodiment of the invention, the molecular weight of said at least one high molecular weight elastomeric biodegradable polymer is from about 10000 g/mol to 800000 g/mol Mn.

In an embodiment of the invention, said granulated gum base comprising at least one low molecular weight elastomer solvent in an amount of about 0% to about 90% by weight of said gum base.

In an embodiment of the invention, the molecular weight of said at least one low molecular weight elastomer solvent is from about 1000 g/mol to 50000 g/mol Mn.

In an embodiment of the invention, gum base granules comprise sweetener in an amount of less than 50% by weight.

In an embodiment of the invention, the gum base is substantially free of lubricants, anti-adherents and glidants.

In an embodiment of the invention, the natural resins provide an improved and sticky texture of the gum base when applied in chewing gum formulation.

In an embodiment of the invention, said gum base is substantially wax free.

In an embodiment of the invention, said gum base is substantially fat free.

In an embodiment of the invention, said gum base comprises filler in an amount of about 0% to about 50% by weight of the gum base.

In an embodiment of the invention, said gum base granules comprise active ingredients, at least a part of said active ingredients has been torn into the chewing gum forming granules or at least a part of the chewing gum forming granules previous to compression.

In an embodiment of the invention, said gum base comprises synthetic resin in an amount of about 15% to about 99%, preferably about 15% to about 80% by weight of the gum base.

In an embodiment of the invention, said gum base comprises emulsifiers and/or fats in an amount of about 10% to about 40% by weight of the gum base.

In an embodiment of the invention, said gum base comprises wax in an amount of about 2% to about 30% by weight of the gum base.

In an embodiment of the invention, at least a part of the flavoring agents has been torn into the gum base or at least a part of the gum base previous to compression.

In an embodiment of the invention said at least one biodegradable polymer comprises at least one polyester obtained by polymerization of at least one compound selected from the group consisting of cyclic esters, alcohols or derivatives thereof and carboxylic acids or derivatives thereof.

In an embodiment of the invention said gum base granules comprise at least one non-biodegradable polymer.

Moreover, the invention relates to a compressed chewing gum made on the basis of at least on biodegradable polymer.

In an embodiment of the invention, the compressed chewing gum is made on the basis of gum base granules according to any of the claims 1-25.

In an embodiment of the invention at least a part of said chewing gum polymers are non-biodegradable.

In an embodiment of the invention said chewing gum granules are blended and compressed together with chewing gum ingredients, preferably powdered chewing gum ingredients, such as sweetener, flavor, filler and emulsifiers.

In an embodiment of the invention the water content is less than 5.0%, preferably less than 1.5% by weight of the gum base.

In an embodiment of the invention the water content is substantially 0%.

In an embodiment of the invention said biodegradable gum base comprises at least two biodegradable polymers.

In an embodiment of the invention said biodegradable gum base granules are used together with conventional non-biodegradable gum base granules.

### Figures

The invention will be described with reference to the following figures, which illustrate the formation of degradation products as measured by head space GC/MS:
- Fig. 1: Illustrates the formation of degradation products in compressed chewing gum containing three different gum bases: One standard gum base and two different biodegradable gum bases.
- Fig. 2: Illustrates the formation of degradation products in compressed chewing gum and in conventionally mixed chewing gum.
- Fig. 3: Illustrates the formation of degradation products in chewing gum containing different amounts of water.

### Detailed description

Unless otherwise indicated, as used herein, the term "molecular weight" means number average molecular weight (Mn). The short form PD designates the polydispersity.

The glass transition temperature may be determined by for example DSC (DSC: differential scanning calorimetry). The DSC may generally be applied for determining and studying of the thermal transitions of a polymer and specifically, the technique may be applied for the determination of a second order transition of a material, i.e. a thermal transition that involves a change in heat capacity, but does not have a latent heat. The glass transition is a second-order transition.

Generally, in the following examples of the detailed description two different types of polymers may be referred to as polyester type 1 and polyester type 2. The polyester type 1 generally refers to a polyester produced through reaction of at least one alcohol or derivative thereof and at least one acid or derivative thereof. Further specification of this type of polyester polymers is given in the specification and claims. The polyester type 2 generally refers to a polyester polymer obtained by polymerization of at least one cyclic ester. Further specification of this type of polyester polymers is given in the specification and claims.

In the present context the terms environmentally or biologically degradable polymer compounds refer to chewing gum base components which, after dumping the chewing gum, is capable of undergoing a physical, chemical and/or biological degradation whereby the dumped chewing gum waste becomes more readily removable from the site of dumping or is eventually disintegrated to lumps or particles which are no longer recognizable as being chewing gum remnants. The degradation or disintegration of such degradable polymers can be effected or induced by physical factors such as temperature, light, moisture, by chemical factors such as hydrolysis caused by a change in pH or by the action of enzymes capable of degrading the polymers. In other useful embodiments all of the polymer components of the gum base are environmentally degradable or biodegradable polymers.

Preferably, the ultimate degradation products are carbon dioxide, methane and water.

According to a preferred definition of biodegradability according to the invention, biodegradability is a property of certain organic molecules whereby, when exposed to the natural environment or placed within a living organism, they react through an enzymatic or microbial process, often in combination with a pure chemical process such as hydrolysis, to form simpler compounds, and ultimately, carbon dioxide, nitrogen oxides and water.

Accordingly, suitable examples of additional environmentally or biologically degradable chewing gum base polymers, which can be applied in accordance with the gum base of the present invention, include degradable polyesters, poly(ester-carbonates), polycarbonates, polyester amides, polypeptides, homopolymers of amino acids such as polylysine, and proteins including derivatives thereof such as e.g. protein hydrolysates including a zein hydrolysate. Particularly useful compounds of this type include polyester polymers obtained by the polymerization of one or more cyclic esters such as lactide, glycolide, trimethylene carbonate, δ-valerolactone, β-propiolactone and ε-caprolactone, and polyesters obtained by polycondensation of a mixture of open-chain polyacids and polyols, for example, adipic acid and di(ethylene glycol). Hydroxy carboxylic acids such as 6-hydroxycaproic acid may also be used to form polyesters or they may be used in conjunction with mixtures of polyacids and polyols. Such degradable polymers may be homopolymers or copolymers, including block-polymers.

The following examples are given for illustration, but not limitation of the invention.

### EXAMPLE 1

### Preparation of polyester type 2 resin

*A resin sample is produced using a cylindrical glass, jacketed 10 L pilot reactor equipped with glass stir shaft and Teflon stir blades and bottom outlet. Heating of the reactor contents is accomplished by circulation of silicone oil, thermostated to 130°C, through the outer jacket. ε-caprolactone (358.87 g, 3.145 mol) and 1, 2-propylene glycol (79.87 g, 1.050 mol) are charged to the reactor together with stannous octoate (1.79 g, 4.42 x 10⁻³ mol) as the catalyst and reacting in about 30 min. at 130°C. Then molten D,L-lactide (4.877 kg, 33.84 mol) is added and reaction is continued for about 2 hours. At the end of this time, the bottom outlet is opened, and molten polymer is allowed to drain into a Teflon-lined paint can.*
*Characterization of the product indicates Mₙ = 6,100 g*/*mol and M_{w} = 7,100 glmol (gel permeation chromatography with online MALLS detector) and Tg = 25-30 °C (DSC, heating rate 10 °C*/*min).*

### Preparation of polyester type 2 elastomer

*An elastomer sample is synthesized within a dry N₂ glove box, as follows. Into a 500 mL resin kettle equipped with overhead mechanical stirrer (10 mm rod), 3,152 g pentaerythritol and 0.5768 g Sn(Oct)₂ (3.56 ml of a 4.27% (w*/*v) solution in methylene chloride) are charged under dry N₂ gas purge. The methylene chloride is allowed to evaporate under the N₂ purge for 15 min. Then s-caprolactone (1148g, 10 mol), trimethylene carbonate (31 g, 0.30 mol) and δ-valerolactone (511 g, 5.1 mol) re added. The resin kettle is submerged in a 130 °C constant temperature oil bath and stirred for 13.4 hours. Subsequently the kettle is removed from the oil bath and allowed to cool at room temperature. The solid, elastic product is removed in small pieces using a knife, and placed into a plastic container.*
*Characterization of the product indicates Mₙ = 88.812 g*/*mol and M_{w} = 297, 000 glmol (gel permeation chromatography with online MALLS detector) and T_{g}* = - *59.4 °C (DSC, heating rate 10 °C*/*min).*

### Preparation of polyester type 1 elastomer

*An elastomer sample is produced using a 500 mL resin kettle equipped with an overhead stirrer, nitrogen gas inlet tube, thermometer and distillation head for removal of methanol. To the kettle are charged 83.50 g (0.43 mole) dimethyl terephthalate, 99.29 g (0.57 mole) dimethyl adipate, 106.60 g (1.005 mole) di(ethylene glycol) and 0.6 g calcium acetate monohydrate. Under nitrogen, the mixture is slowly heated with stirring until all components become molten (120-140°C). Heating and stirring are continued and methanol is continuously distilled. The temperature slowly rises in the range 150-200 °C until the evolution of methanol ceases. Heating is discontinued and the content is allowed to cool to about 100 °C*. *The reactor lid is removed and the molten polymer is carefully poured into a receiving vessel.*
*Characterization of the product indicates Mₙ = 50, 000 g*/*mol and M_{w} = 100, 000 g*/*mol (gel permeation chromatography with online MALLS detector) and T_{g} = -30 °C (DSC, heating rate 10 °C*/*min).*

Referring to the above-described polyester type 1, polymers of this type may generally within the scope of the invention be prepared by step-growth polymerization of di-, tri- or higher-functional alcohols or esters thereof with di-, tri- or higher-functional aliphatic or aromatic carboxylic acids or esters thereof. Likewise also hydroxy acids or anhydrides and halides of polyfunctional carboxylic acids may be used as monomers. The polymerization may involve direct polyesterification or transesterification and may be catalyzed. Use of branched monomers suppresses the crystallinity of the polyester polymers. Mixing of dissimilar monomer units along the chain also suppresses crystallinity. To control the reaction and the molecular weight of the resulting polymer it is possible to stop the polymer chains by addition of monofunctional alcohols or acids and/or to utilize a stoichiometric imbalance between acid groups and alcohol groups or derivatives of either. Also the adding of long chain aliphatic carboxylic acids or aromatic monocarboxylic acids may be used to control the degree of branching in the polymer and conversely multifunctional monomers are sometimes used to create branching. Moreover, following the polymerization monofunctional compounds may be used to endcap the free hydroxyl and carboxyl groups.

In general, polyfunctional carboxylic acids are high-melting solids that have very limited solubility in the polycondensation reaction medium. Often esters or anhydrides of the polyfunctional carboxylic acids are used to overcome this limitation. Polycondensations involving carboxylic acids or anhydrides produce water as the condensate, which requires high temperatures to be driven off. Thus, polycondensations involving transesterification of the ester of a polyfunctional acid is often the preferred process. For example, the dimethyl ester of terephthalic acid may be used instead of terephthalic acid itself. In this case, methanol rather than water is condensed, and the former can be driven off more easily than water. Usually the reaction is carried out in the bulk (no solvent) and high temperatures and vacuum are used to remove the by-product and drive the reaction to completion. In addition to an ester or anhydride, a halide of the carboxylic acid may also be used under certain circumstances.

Usually for preparation of polyesters type 1 the preferred polyfunctional carboxylic acids or derivatives thereof are either saturated or unsaturated aliphatic or aromatic and contain 2 to 100 carbon atoms and more preferably 4 to 18 carbon atoms. In the polymerization of polyester type 1 some applicable examples of carboxylic acids, which may be employed as such or as derivatives thereof, includes aliphatic polyfunctional carboxylic acids such as oxalic, malonic, citric, succinic, malic, tartaric, fumaric, maleic, glutaric, glutamic, adipic, glucaric, pimelic, suberic, azelaic, sebacic, dodecanedioic acid, etc. and cyclic aliphatic polyfunctional carboxylic acids such as cyclopropane dicarboxylic acid, cyclobutane dicarboxylic acid, cyclohexane dicarboxylic acid, etc. and aromatic polyfunctional carboxylic acids such as terephthalic, isophthalic, phthalic, trimellitic, pyromellitic and naphthalene 1,4-, 2,3-, 2,6-dicarboxylic acids and the like. For the purpose of illustration and not limitation, some examples of carboxylic acid derivatives include hydroxy acids such as 3-hydroxy propionic acid and 6-hydroxycaproic acid and anhydrides, halides or esters of acids, for example dimethyl or diethyl esters, corresponding to the already mentioned acids, which means esters such as dimethyl or diethyl oxalate, malonate, succinate, fumarate, maleate, glutarate, adipate, pimelate, suberate, azelate, sebacate, dodecanedioate, terephthalate, isophthalate, phthalate, etc. Generally speaking, methyl esters are sometimes more preferred than ethyl esters due to the fact that higher alcohols are more difficult to remove than lower alcohols.

Furthermore, the usually preferred polyfunctional alcohols contain 2 to 100 carbon atoms as for instance polyglycols and polyglycerols. In the polymerization process of polyl some applicable examples of alcohols, which may be employed as such or as derivatives thereof, include polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, glycerol, trimethylolpropane, pentaerythritol, sorbitol, mannitol, etc. For the purpose of illustration and not limitation, some examples of alcohol derivatives include triacetin, glycerol palmitate, glycerol sebacate, glycerol adipate, tripropionin, etc. Additionally, with regard to polyester type 1 polymerization the chain-stoppers sometimes used are monofunctional compounds. They are preferably either monohydroxy alcohols containing 1-20 carbon atoms or monocarboxylic acids containing 2-26 carbon atoms. General examples are medium or long-chain fatty alcohols or acids and specific examples include monohydroxy alcohols such as methanol, ethanol, butanol, hexanol, octanol, etc. and lauryl alcohol, myristyl alcohol, cetyl alcohol, stearyl alcohol, stearic alcohol, etc. and monocarboxylic acids such as acetic, lauric, myristic, palmitic, stearic, arachidic, cerotic, dodecylenic, palmitoleic, oleic, linoleic, linolenic, erucic, benzoic, naphthoic acids and substituted napthoic acids, 1-methyl-2 naphthoic acid and 2-isopropyl-1-naphthoic acid, etc.

Typically, an acid catalyst or a transesterification catalyst is used in the polyl polymerization and non-limiting examples of those are the metal catalysts such as acetates of manganese, zinc, calcium, cobalt or magnesium, and antimony(III)oxide, germanium oxide or halide and tetraalkoxygermanium, titanium alkoxide, zinc or aluminum salts.

Referring to the examples regarding polyester type 2 polymers of this type may generally be obtained by ring-opening polymerization of one or more cyclic esters, which includes glycolides, lactides, lactones and carbonates. The polymerization process may take place in the presence of an appropriate catalyst such as stannous octoate and may be initiated.

### EXAMPLE 2

### Preparation of gum bases and gum base granulate

The gum bases were composed as described in the following table 1:

**Table 1: Formulations of gum bases. The numbers refer to % by weight.**

| Raw Material | Bio-base A | Bio-base B | Std.-base |
|---|---|---|---|
| Standard conv. elastomer | | | 16.50 |
| Standard conv. resin | | | 26.10 |
| Polyester 1 elastomer | | 33.50 | |
| Polyester 2 elastomer | 34.80 | | |
| Polyester 2 resin | 52.20 | 53.50 | |
| Filler | 5.00 | 5.00 | 30.50 |
| Emulsifier | 2.00 | 2.00 | 7.80 |
| Fat | 4.00 | 2.00 | 19.10 |
| Wax | 4.00 | 4.00 | |
| Menthol | 0-1 | 0-1 | 0-1 |

The individual gum bases are prepared as follows:
The elastomers are added to a mixing kettle provided with mixing means like e.g. horizontally placed Z-shaped arms. The elastomers are broken into small pieces and softened with mechanical action in the kettle and by the addition of softener. A suitable softener may e.g. comprise the flavor, i.e. in the currently described embodiments menthol flavor.

The softening system comprising emulsifiers, fats and/or wax is slowly added into the mixture and mixing is continued until a homogenous gum base is obtained. Mixing time is typically in the range of 30 minutes to 4 hours depending on the composition and mixing technology. The mixing temperature will typically be in the range from 50°C to 120°C.

The mixture is then discharged into the pan or pelletized and allowed to cool to room temperature from the discharged temperature of 50-120°C.

Evidently, other gum base preparation methods may be applied according to the invention

The obtained gum bases are subsequently processed in order to obtain a gum base granulate of small gum base granules, which subsequently may be tabletted by means of compression with further chewing gum ingredients.

The applied process for obtaining the desired gum base granulate implies initial establishing of gum base macro granules, e.g. of a size of approximately 0.5 · 0.5 centimeters by cutting or stamping. The macro granules are blended with a sorbitol bulk sweetener in a 1 to 1 ratio. The obtained mix is frozen and grinded or milled during cooling. The obtained gum base granules are then sieved in order to obtain the intended particle size. According to an embodiment of the invention, the particle size of the granules is kept below approximately 1mum · 1 mm. According to a further embodiment of the invention it is possible when applying biodegradable polymers to carry out grinding without the conventional addition of sorbitol.

Evidently, several other granulation techniques may be applied according to the invention, such as the methods described in WO 8603967, EP 513978, US 4405647, US 5866179, WO 9721424, PCT/DK03/00070 and PCT/DK03/00465 hereby included by reference.

### EXAMPLE 3

### Preparation of chewing gum

The compressed chewing gum formulation is composed as shown in table 2:

**Table 2: Formulation of compressed chewing gum. The numbers refer to % by weight of the complete final chewing gum.**

| Raw Material | Ingredient (%) |
|---|---|
| Gum Base | 40 |
| Sorbitol | 55.40 |
| Flavor powder | 2.30 |
| Aspartame | 0.15 |
| Acesulfame | 0.15 |
| Mg stearate | 2.00 |

The resulting compressed chewing gums were prepared according to the conventional process known in the art as comprising the steps of blending the gum base granules with the further powdered chewing gum ingredients, optionally sieving the blend, tabletting the sieved mix by compression and optionally coating the tablet. Besides the preparation of abovementioned compressed chewing gum tablets, additional non-compressed chewing gum tablets were prepared too. These were prepared for the purpose of comparison and the process used included conventional mechanical mixing of the chewing gum formulation, which was substantially identical to the compressed chewing gum formulation.

The different tablet types prepared are indicated in table 3:

**Table 3: Tablet types as prepared with different base types and coatings and with different processes, which include either compression or conventional mixing.**

| Tablet type | Process | Gum base | Coat |
|---|---|---|---|
| A | Compressed | Std. Base | None |
| B | Compressed | Std. Base | Xylitol |
| C | Compressed | Std. base | Film |
| D | Compressed | Bio base A | None |
| E | Compressed | Bio base A | Xylitol |
| F | Compressed | Bio base A | Film |
| G | Compressed | Bio base B | None |
| H | Compressed | Bio base B | Xylitol |
| I | Compressed | Bio base B | Film |
| J | Conventional Mix. | Std. base | None |
| K | Conventional Mix. | Std. base | Xylitol |
| L | Conventional Mix. | Bio base A | None |
| M | Conventional Mix. | Bio base A | Xylitol |
| N | Conventional Mix. | Bio base B | None |
| O | Conventional Mix. | Bio base B | Xylitol |

Further tablet types were prepared with variation in water contents. The water was added through addition of different amounts of maltitol syrup (contains 30% water). The manufacturing process of these tablets included conventional mixing.

**Table 4: Tablet types, which are containing bio base A and having different water contents. The values shown are additional percentages to the existing water content of 1.5% in the conventionally mixed chewing gum.**

| Tablet type | Water content |
|---|---|
| P | 0% |
| Q | 1% |
| R | 2% |
| S | 4% |
| T | 6% |
| U | 8% |

### EXAMPLE 4

### Evaluation on chewing gum degradation in water

A visual evaluation, pH-measurements and a GC/MS analysis were carried out to evaluate the degradation of unchewed chewing gum during and after the first week of degradation in water.

The visual evaluation results concerning chewing gum tablets, which were placed in demineralized water, are given in the following table 5. It should be noted that the table contains evaluation of samples exposed to 40°C along with different samples of identical tablet types exposed to 60°C. Each sample was kept at the same temperature during the evaluation period.

The applied ratings are:

| | |
|---|---|
| 0: | the tablet core is substantially intact and the liquid is clear, |
| 1: | the tablet core is substantially intact and there is a small formation of |
| | free particles in the liquid, |
| 2: | initial crumpling of the tablet core is observed by larger formation of |
| | free particles in the liquid, |
| 3: | free particles predominates, tablet core is gradually diminishing, |
| 4: | core is now completely dissolved in small particles. |

**Table 5: Visual evaluation of degradation effects on chewing gum tablets placed in demineralized water at 40°C or 60°C. Each entry represents two samples showing the same result. Numbers alone indicate the degree of crumbling of the chewing gum pieces concerned. "T" denotes a thickening degree of the chewing gum piece, where T1 represents a small enlargement and T2 a bigger enlargement. "W" indicates that the solution has obtained a white color, which may be ascribed to dissolution of coating material. A * marks an occurrence of a yellow color in the demineralized water.**

| Tablet type | Gum base | Coat | Eval. 40°C Day 2 | Eval. 40°C Day 6 | Eval. 60°C Day 2 | Eval. 60°C Day 3 | Eval. 60°C Day 6 | Eval. 60°C Day 8 |
|---|---|---|---|---|---|---|---|---|
| Compr. | | | | | | | | |
| A | Std. base | No | 1 | 2 | 3 | 3 | 3 | 4 |
| B | Std. base | Xylitol | 2 | 3 | 3 | 4 | 4 | 4 |
| D | Bio A | No | 0 | 0 | 1 | 1 | 1 | 1 |
| E | Bio A | Xylitol | 1 | 1 | 1 | 1 | 1 | 1 |
| G | Bio B | No | 0 | 0 | 0 | 1 | 2 | 3 |
| H | Bio B | Xylitol | 1 or 2 | 1 or 2 | 2 | 2 | 2 | 3 |

| Conv. | | | | | | | | |
|---|---|---|---|---|---|---|---|---|
| J | Std. base | No | 0 | 0 | 0 | 0 | 0* | 0 |
| K | Std. base | Xylitol | 0 | 0 | 0 | 0 | 0 | 0 |
| L | Bio A | No | 0 | 0 | 0 | 0, T1 | 0, T2 | 0, T2 |
| M | Bio A | Xylitol | 0, W | 0, W | 0, W | 0, W | 0, W, T1 | 0, W, T2 |
| N | Bio B | No | 0 | 0 | 0 | 0, T1 | 0, T2 | 0, T2 |
| O | Bio B | Xylitol | 0, W | 0, W | 0, W | 0, W | 0, W, T1 | 0, W, T2 |

Tablet types designated C, F and I are not included in table 5 due to the fact that the quite fast initial dissolving of the film-coating disturbed the visual evaluation because the water surrounding the tablet was milky from the first day of evaluation.

When evaluating table 5, it is noted that compressed chewing gum made on the basis of biodegradable polymers is more stable prior to chewing than the conventional polymer counterpart. This result is highly surprising as it should be expected that a prior-chew degradation would result in a weakening of the already week structure characterizing compressed chewing gum tablets in general.

Moreover, a further observation is that the bio base A containing type 2 polymers appears to be more stable than the bio base B containing a blend of type 2 and type 1 polymers.

The following table shows the results of measuring pH of the demineralized water in which the above-mentioned chewing gum tablets were placed.

**Table 6: pH in the demineralized water, wherein chewing gum tablets were placed.**

| Tablet type | Gum base | Coat | Eval. 40°C Day 1 | Eval. 40°C Day 2 | Eval. 40°C Day 6 | Eval. 40°C Day 7 | Eval. 60°C Day 1 | Eval. 60°C Day 2 | Eval. 60°C Day 6 | Eval. 60°C Day 7 |
|---|---|---|---|---|---|---|---|---|---|---|
| Compressed | | | | | | | | | | |
| A | Std. | No. | 6.5 | 6.3 | 7.3 | 6.4 | 6.9 | 6.9 | 6.4 | 6.3 |
| B | Std. | Xyl. | 6.7 | 6.5 | 7.3 | 6.3 | 6.8 | 6.7 | 6.2 | 6.4 |
| C | Std. | Film | 6.6 | 6.6 | - | 5.3 | 7.0 | 6.9 | 6.2 | 6.0 |
| D | Bio A | No. | 6.3 | 5.8 | 6.4 | 5.9 | 5.7 | 5.8 | 4.8 | 4.2 |
| E | Bio A | Xyl. | 6.1 | - | 6.6 | 6.1 | 5.4 | - | 4.4 | 4.3 |
| F | Bio A | Film | 6.2 | - | - | 6.1 | 5.4 | - | 4.8 | 4.4 |
| G | Bio B | No. | 6.3 | 5.7 | 6.0 | 5.9 | 6.1 | 5.9 | 4.8 | 4.3 |
| H | Bio B | Xyl. | 6.3 | - | 6.4 | 6.2 | 6.2 | - | 4.8 | 4.4 |
| I | Bio B | Film | 6.2 | 6.3 | 6.1 | 5.6 | 6.1 | 5.7 | 4.8 | 4.8 |

| Conventional | | | | | | | | | | |
|---|---|---|---|---|---|---|---|---|---|---|
| J | Std. | No. | 5.4 | 5.6 | 6.1 | 5.9 | 5.0 | 5.9 | 6.2 | 6.4 |
| K | Std. | Xyl. | 6.6 | - | 6.0 | 6.4 | 7.5 | 5.4 | 6.1 | 6.6 |
| L | Bio A | No. | 3.2 | - | 3.6 | 3.4 | 3.3 | 3.4 | - | 3.6 |
| M | Bio A | Xyl. | 3.4 | 3.4 | 3.6 | 3.5 | 3.5 | 3.5 | 3.6 | 3.6 |
| N | Bio B | No. | 3.3 | 3.3 | 3.6 | 3.4 | 3.4 | - | 3.8 | 3.5 |
| O | Bio B | Xyl. | 3.4 | 3.4 | 3.6 | 3.5 | 3.6 | 3.6 | 3.7 | 3.6 |

The results appearing for chewing gum including standard gum base show that pH is rather unchanged from day 1 to day 7 as regards both the tests on compressed chewing gum and conventionally mixed chewing gum. This verifies that changes observed for chewing gum containing biodegradable polymers are owing to the presence of these biodegradable polymers, and not to the other chewing gum ingredients.

It is noted that the pH drops at a slower rate when applying biodegradable polymers in compressed chewing gum compared to conventionally mixed chewing gum. In other words, prior to chew, the process of manufacturing compressed chewing gum tablets appears to result in a delayed prior-chewing degradation, when compared to chewing gums made on the basis of biodegradable chewing gum by conventional mixing.

Testing the influence of water content on the degradation gave the following results as evaluated visually and by measuring pH-values of the demineralized water, wherein the chewing gum tablets were placed:

**Table 7: Visual evaluation on tablets (conventionally mixed chewing gum composition) with different water contents. The gum base used is bio base A. "T" denotes a thickening degree of the chewing gum piece, where T1 represents a small enlargement and T2, T3 and T4 indicate consecutive bigger enlargements. "Shrink" degrees are rated in the interval 1 to 4, wherein 4 represent the largest observed shrinking of the chewing gum piece. "Crumble1" indicates a slight crumbling.**

| Tablet | Water content % | Evaluation 40°C Day 2 | Evaluation 40°C Day 6 | Evaluation 60°C Day 2 | valuation 60°C Day 6 | Evaluation 60°C Day 8 |
|---|---|---|---|---|---|---|
| P | 0 | T1 | T1 | T2 | T2 | T3 |
| Q | 1 | T2 | T2 | T2 | T3 | T3 |
| R | 2 | T2 | T2 | T2 | T3 | Shrink 2 |
| S | 4 | T3 | T3 | T3 | T3 | Shrink 3 |
| T | 6 | T4 | T4 | T4 | T4 | Shrink 4 |
| U | 8 | Crumble 1 | Crumble 1 | Crumble 1 | Crumble 1 | Crumble 1 |

The results in table 7 show that additional water in chewing gum makes the degradation proceed faster and the tendency is augmented the higher the water content.

**Table 8: pH in the demineralized water, wherein chewing gum tablets (conventionally mixed chewing gum composition) with different water contents were placed. The gum base used is bio base A. Each result shown is an average of two samples.**

| Tablet | Water content % | Eval. 40°C Day 1 | Eval. 40°C Day 2 | Eval. 40°C Day 6 | Eval. 40°C Day 7 | Eval. 60°C Day 1 | Eval. 60°C Day 2 | Eval. 60°C Day 6 | Eval. 60°C Day 7 |
|---|---|---|---|---|---|---|---|---|---|
| P | 0 | 3.2 | 3.3 | 3.5 | 3.4 | 3.3 | - | 3.6 | 3.5 |
| Q | 1 | 3.2 | - | 3.5 | 3.4 | 3.3 | 3.4 | 3.6 | 3.5 |
| R | 2 | 3.2 | 3.3 | 3.5 | 3.6 | 3.4 | - | - | 3.5 |
| S | 4 | 3.3 | 3.3 | - | 3.4 | 3.3 | 3.5 | 3.6 | 3.5 |
| T | 6 | 3.4 | 3.3 | 3.6 | 3.5 | 3.5 | 3.5 | 3.6 | 3.4 |
| U | 8 | 3.4 | 3.4 | 3.8 | 3.5 | 3.5 | 3.6 | 3.7 | 3.6 |

Because it is realized that pH is low and is not falling in the period from day 1 to day 7, but on the contrary it is rather low already on day 1, which indicates that pH is falling drastically within a shorter time span, such as a few hours. To confirm this observation two samples were placed in demineralized water, at pH measured during the first hours. The result is shown in table below:

**Table 9: pH development during the first 22 hours of chewing gum degradation in demineralized water.**

| Time [hours] | Tablet type P | Tablet type T |
|---|---|---|
| 0 | 5 | 5 |
| 1 | 5 | 5 |
| 2 | 5 | 4 |
| 3 | 5 | 4 |
| 4 | 5 | 4 |
| 5 | 5 | 4 |
| 6 | 4 | 3 |
| 22 | 3 | 3 |

It appears that the pH value falls to 3 within one day, and it is also seen that higher water content as in tablet type T makes the pH fall quicker.

The method used in the evaluation by GC/MS included headspace-sampling (Perkin Elmer Turbo Matrix 40), thus both the chewing gum residues and the demineralized water, in which they were placed were after degradation transferred to vials wherein release of components to headspace were obtained. After a period of equilibration a sample of headspace-air was injected into the GC/MS-system (Perkin Elmer Clarus 500) and in the resulting chromatograms the areas of relevant peaks were evaluated whereby the degradation of different chewing gums were compared as described in the following.

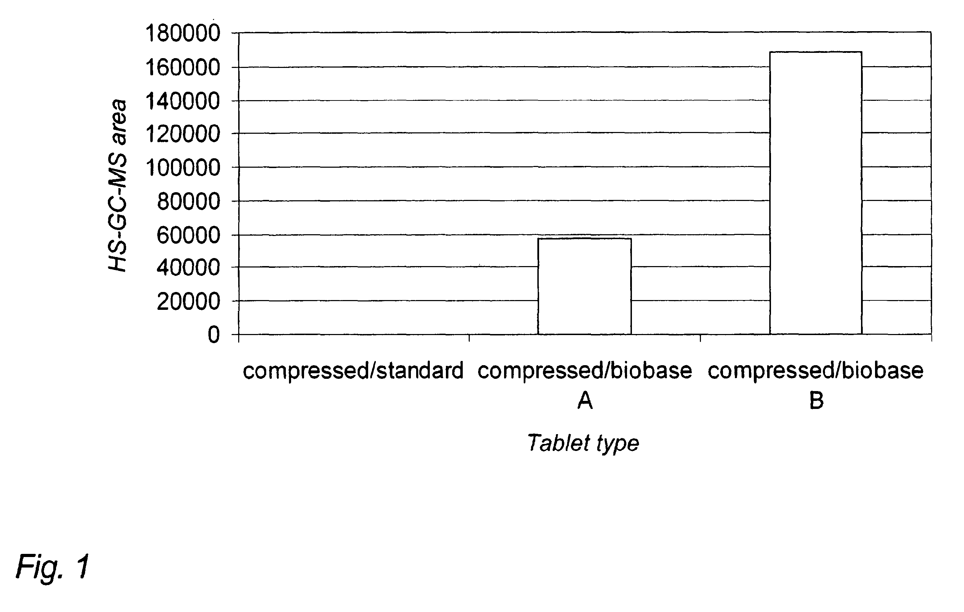

Figures 1 to 3 are obtained from headspace GC/MS measurements of chewing gum samples, which were left for degradation in water for a week at 40 °C.

Figure 1 shows headspace GC/MS peak areas corresponding to the formation of a degradation product from compressed chewing gum samples. It appears that there are no degradation products resulting from the chewing gum comprising solely standard gum base. Regarding the biodegradable chewing gum it is noticed that the amount of degradation product from chewing gum comprising bio base B, which is a blend of polyesters of type 1 and 2, is larger than the corresponding amount in chewing gum comprising bio base A, which is solely comprising polyesters of type 2.

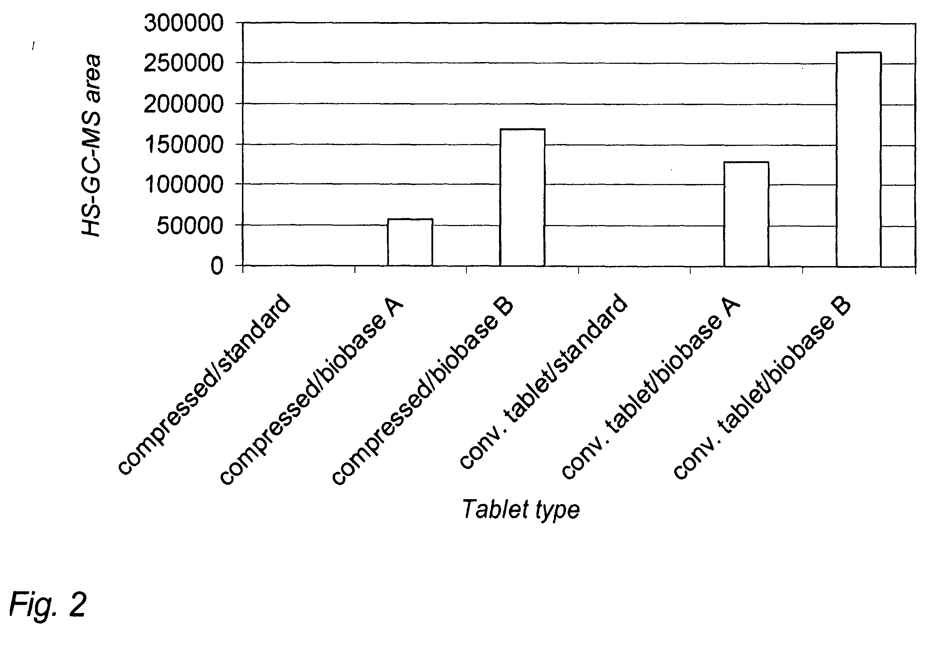

Figure 2 shows the same peak areas as figure 1 with the addition of results measured on chewing gum tablets prepared by a process including conventional mixing. The remarkable result is a larger amount of degradation product coming from conventional chewing gum tablets than from compressed chewing gum tablets.

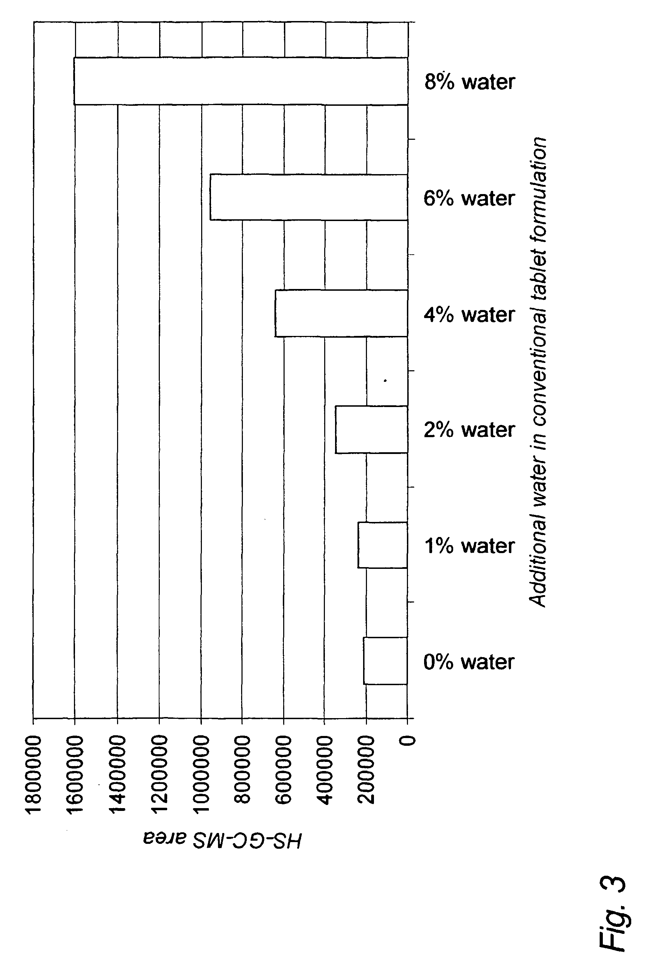

Figure 3 shows that increase in water content results in an increased amount of degradation product.

### EXAMPLE 5

### Evaluation on chewing gum degradation in air

The following sensory evaluation is carried out on chewing gum samples, which are unchewed.

In tables 10 and 11 here below the sensory evaluation is shown:

**Table 10: Sensory evaluation on compressed and conventional chewing gum samples after a week of degradation in air.**

| Tablet Type | Gum base | Coat | Sensory Evaluation 40°C, Day 7 | Sensory Evaluation 60°C, Day 7 |
|---|---|---|---|---|
| Compressed | | | | |
| A | Std. | No. | Initial chew ok. Taste ok. No offnotes. Consistency ok | Initially crumbly. Soft. No offnotes. Consistency ok |
| B | Std. | Xyl. | Initial chew ok. Taste ok. No offnotes. Consistency ok | Initially hard and crumbly. "old" offnote. Surface is less smooth than in A (60°C), but same consistency in the end. |
| C | Std. | Film | Initial chew ok. Taste ok. No offnotes. Consistency ok | Initially hard and crumbly. Coating tacks to teeth. Soft. No offnotes. Fall apart. |
| D | Bio A | No. | Initial chew ok. Taste ok. No offnotes. Consistency ok | Slightly crumbly. Medium hard consistency. Gathers quickly. No offnotes. Consistency ok. |
| E | Bio A | Xyl. | Initial chew ok. Taste ok. No offnotes. Consistency ok | Softer that D (60°C). Xylitol tack to teeth. No offnotes. Consistency ok. |
| F | Bio A | Film | Initial chew ok. Taste ok. No offnotes. Consistency ok | Initially medium hard. Slightly crumbly. Acidic offnote. Consistency ok. |
| G | Bio B | No. | Crumbly initial chew. Is chewed together. No offnotes. Consistency ok. | Initially medium soft. Slightly crumbly. No offnotes. Consistency ok. |
| H | Bio B | Xyl. | Crumbly initial chew. Is chewed together. No offnotes. Consistency ok. | Initially medium hard. Crumbly. "old" offnote. Gathers. Consistency ok. Taste not ok. |
| I | Bio B | Film | Very crumbly initial chew. Is chewed together. No offnotes. Consistency ok. | Initially medium hard. Crumbly. Tack. No offnotes. Gathers. Consistency ok. Taste good. |

| Conventional | | | | |
|---|---|---|---|---|
| J | Std. | No. | Initial chew ok. Taste ok. No offnotes. Consistency ok | Initially hard and crumbly. Gathers. Faint "old" offnote. Consistency ok. |
| K | Std. | Xyl. | Initial chew ok. Taste ok. No offnotes. Consistency ok | Initial chew good. Fresh taste. Cooling. Soft. Softer than K (60°C). Smooth. Consistency ok. |
| L | Bio A | No. | Initial chew is hard and slightly crumbly. Gathers. Taste ok. Consistency ok. | Initial chew is very hard and plastic. Softens. "old" offnote. Consistency ok. Taste not ok and acidic offnote later. |
| M | Bio A | Xyl. | Initial chew ok. Taste ok. No offnotes. Consistency ok | Initially good. "old" offnote. Very soft consistency. |
| N | Bio B | No. | Initial chew ok. Taste ok. No offnotes. Consistency ok | Initially hard. Large acidic notes. Consistency ok. Taste unacceptable. |
| O | Bio B | Xyl. | Initial chew ok. Taste ok. No offnotes. Consistency ok | Initially soft and crumbly. Gathers. Consistency ok. Faint acidic offnote. |

In accordance with the measurements of degradation product observed in figure 2, it appears from the sensory evaluation in table 10 (results at 60 °C) that conventional chewing gum is generally worse than compressed chewing gum with regard to parameters such as offnotes and taste. In other words when leaving compressed chewing gum for degradation in air at elevated temperatures it appears to show a higher degree of stability than conventional chewing gum.

**Table 11: Sensory evaluation on chewing gum samples after a week of degradation in air, the difference between the samples being the water contents.**

| Tablet type | Water content % | Sensory Evaluation 40°C Day 7 | Sensory Evaluation 60°C Day 7 |
|---|---|---|---|
| P | 0 | Initial chew is hard and slightly crumbly. Gathers. Taste ok. Consistency ok. | Initially hard and plastic. Faint "old" offnote. Consistency ok. |
| Q | 1 | Initial chew is hard and slightly crumbly. Gathers. Taste ok. Consistency ok. | Initially hard and plastic. Faint "old" offnote. Consistency ok. Much like P (60°C). |
| R | 2 | Initial chew is hard and slightly crumbly. Gathers. Taste ok. Consistency ok. | Initially medium hard and plastic. Softer than P and Q (60°C). Acidic offnote. Taste very unacceptable. |
| S | 4 | Initial chew ok. Taste ok. No offnotes. Consistency ok | Initially soft. Acidic offnotes - not as much as Q (60°C). Consistency ok. |
| T | 6 | Initial chew ok. Taste ok. No offnotes. Consistency ok. | Initially soft and plastic. "old" offnotes. Consistency ok. Taste not ok. |
| U | 8 | Initial chew is brittle and slightly crunchy. Taste ok. No offnotes. Consistency ok. | Initially breaking crusty and plastic. Tack to teeth. "old" offnote like T (60°C). Consistency gets ok. |

The evaluation in table 11 reveals that several "old" or acidic offnotes emerges in chewing gum containing additional water. The tendency is increased or accelerated, when the chewing gum is kept at 60 °C compared to 40 °C. It is likely that such acidic notes correspond to a measurable lowering in pH-values.

The gum base granulates are made on the basis of a gum base. As used herein, the expression "gum base" refers in general to the water insoluble part of the chewing gum, which typically constitutes 10 to 90% by weight including the range of 15-50% by weight of the total chewing gum formulation. Chewing gum base formulations typically comprise one or more elastomeric compounds of synthetic or natural origin, at least two resinous compounds which, according to the invention is both of synthetic or natural origin, fillers, softening compounds and minor amounts of miscellaneous ingredients such as antioxidants and colorants, etc.

In the present context, chewing gum additives include bulk sweeteners, high-intensity sweeteners, flavoring agents, softeners, emulsifiers, coloring agents, binding agents, acidulants, fillers, antioxidants and other components such as pharmaceutically or biologically active substances that confer desired properties to the finished chewing gum product.

Examples of suitable sweeteners are listed below.

Suitable bulk sweeteners include e.g. both sugar and non-sugar components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High-intensity artificial sweetening agents can also be used alone or in combination with the above sweeteners. Preferred high-intensity sweeteners include, but are not limited to, sucralose, aspartame, salts of acesulfame, alitame, saccharin and its salts, neotam, cyclamic acid and its salts, glycyrrhizin, dihydrochalcones, thaumatin, monellin, sterioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve desired release characteristics.

Usage level of the artificial sweetener will vary considerably depending e.g. on factors such as potency of the sweetener, rate of release, desired sweetness of the product, level and type of flavor used and cost considerations. Thus, the active level of artificial sweetener may vary from about 0.02 to about 8% by weight. When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as with aqueous sugar or alditol solutions.

If a low-calorie gum is desired, a low-calorie bulking agent can be used. Examples of low-calorie bulking agents include polydextrose, Raftilose, Raftilin, Inuline, fructooligosaccharides (NutraFlora^{®}), palatinose oligosaccharided; guar gum hydrolysates (e.g. Sun Fiber^{®}) or indigestible dextrins (e.g. Fibersol^{®}). However, other low-calorie bulking agents can be used.

Further chewing gum additives, which may be included in the chewing gum mixture processed in the present process include surfactants and/or solubilisers, especially when pharmaceutically, cosmetically or biologically active ingredients are present. As examples of types of surfactants to be used as solubilisers in a chewing gum composition according to the invention reference is made to H.P. Fiedler, Lexikon der Hilfstoffe für Pharmacie, Kosmetik und Angrenzende Gebiete, pages 63-64 (1981) and the lists of approved food emulsifiers of the individual countries. Anionic, cationic, amphoteric or non-ionic solubilisers can be used. Suitable solubilisers include lecithins, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllactylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. The expression "solubiliser" is used in the present text to describe both possibilities, the solubiliser used must be suitable for use in food and/or medicine.

In the presence of an active ingredient the chewing gum may preferably also comprise a carrier known in the art.

One significant advantage of the present process is that the temperature throughout the entire operation can be kept at a relatively low level such as it will be described in the following. This is an advantageous feature with regard to preserving the aroma of added flavoring components, which may be prone to deterioration at higher temperatures. Aroma agents and flavoring agents which are useful in a chewing gum produced by the present process are e.g. natural and synthetic flavorings (including natural flavorings) in the form of freeze-dried natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

In one preferred embodiment, the flavor is one or more natural flavoring agent(s) which is/are freeze-dried, preferably in the form of a powder, slices or pieces or combinations thereof. The particle size of such agents may be less than 3 mm, such as less than 2 mm, more preferred less than 1 mm, taken as the longest dimension of the particle. The natural flavoring agent may also be in a form where the particle size is from about 3 µm to 2 mm, such as from 4 µm to 1 mm. Preferred natural flavoring agents include seeds from a fruit e.g. from strawberry, blackberry and raspberry.

Various synthetic flavors, such as mixed fruit flavor may also be used according to the present invention. As indicated above, the aroma agent may be used in quantities smaller than those conventionally used. The aroma agents and/or flavors may be used in an amount of about 0.01 to about 30% by weight of the final product depending on the desired intensity of the aroma and/or flavor used. Preferably, the content of aroma/flavor is in the range of about 0.2 to 3% by weight of the total composition.

According to the invention, encapsulated flavors or active ingredients, may be added to the final blend prior to compression.

Different methods of encapsulating flavors or active ingredients, which may both refer to flavors or active ingredients mixed into the gum base and flavors or active ingredients compressed into the chewing gum may e.g. include Spray drying, Spray cooling, Film coating, Coascervation, Double emulsion method (Extrusion technology) or Prilling.

Materials to be used for the above-mentioned encapsulation methods may e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

Active ingredients may be added to chewing gum. Preferably, these ingredients should be added subsequent to any significant heating or mixing. In other words, the active ingredients, should preferably be added immediately prior to the compression of the final tablet.

Active ingredients may be cautiously blended with the gum base granulate and further desired additives, immediately prior to the final compression of the tablet.

Examples of suitable active ingredients are listed below.

In one embodiment of the invention, the chewing gum comprises a pharmaceutically, cosmetically or biologically active substance. Examples of such active substances, a comprehensive list of which is found e.g. in WO 00/25598, which is incorporated herein by reference, include drugs, dietary supplements, antiseptic agents, pH-adjusting agents, anti-smoking agents and substances for the care or treatment of the oral cavity and the teeth such as hydrogen peroxide and compounds capable of releasing urea during chewing. Examples of useful active substances in the form of antiseptics include salts and derivatives of guanidine and biguanidine (for instance chlorhexidine diacetate) and the following types of substances with limited water-solubility: quaternary ammonium compounds (e.g. ceramine, chloroxylenol, crystal violet, chloramine), aldehydes (e.g. paraformaldehyde), derivatives of dequaline, polynoxyline, phenols (e.g. thymol, p-chlorophenol, cresol), hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. also Martindale, The Extra Pharmacopoeia, 28th edition, page 547-578; metal salts, complexes and compounds with limited water-solubility, such as aluminum salts, (for instance aluminum potassium sulphate AlK(SO₄)₂,12H₂O) and salts, complexes and compounds of boron, barium, strontium, iron, calcium, zinc, (zinc acetate, zinc chloride, zinc gluconate), copper (copper chloride, copper sulphate), lead, silver, magnesium, sodium, potassium, lithium, molybdenum, vanadium should be included; other compositions for the care of mouth and teeth: for instance; salts, complexes and compounds containing fluorine (such as sodium fluoride, sodium monofluorophosphate, aminofluorides, stannous fluoride), phosphates, carbonates and selenium. Further active substances can be found in J. Dent.Res. Vol. 28 No. 2, pages 160-171,1949.

Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

Active ingredients may comprise the below-mentioned compounds or derivates thereof, but are not limited thereto: Acetaminophen, Acetylsalicylsyre Buprenorphine Bromhexin Celcoxib Codeine, Diphenhydramin, Diclofenac, Etoricoxib, Ibuprofen, indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chlorhexidine, Ecabet-sodium, Haloperidol, Allopurinol, Colchinine, Theophylline, Propanolol, Prednisolone, Prednisone, Fluoride, Urea, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and or Ratinidine.

The invention is suitable for increased or accelerated release of active agents selected among the group of dietary supplements, oral and dental compositions, antiseptic agents, pH-adjusting agents, anti-smoking agents, sweeteners, flavorings, aroma agents or drugs. Some of those will be described below.

The active agents to be used in connection with the present invention may be any substance desired to be released from the chewing gum. The active agents, for which a controlled and/or accelerated rate of release is desired, are primarily substances with a limited water-solubility, typically below 10 g/100 ml inclusive of substances which are totally water-insoluble. Examples are medicines, dietary supplements, oral compositions, anti-smoking agents, highly potent sweeteners, pH-adjusting agents, flavorings, etc.

Other active ingredients are, for instance, paracetamol, benzocaine, cinnarizine, menthol, carvone, caffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, Folic acid, niacine, biotine, poorly-soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutrients accepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth, are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. furthermore Martindale, The Extra Pharmacopoeia, 28th edition, pages 547-578; metal salts, complexes and compounds with limited water-solubility, such as aluminum salts, (for instance aluminum potassium sulfate AlK(SO₄)₂,12H₂O) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

Cf. furthermore J. Dent.Res. Vol. 28 No. 2, pages 160-171, 1949, wherein a wide range of tested compounds is mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance: nicotine, tobacco powder or silver salts, for instance silver acetate, silver carbonate and silver nitrate.

In a further embodiment of the invention, the sucrose fatty acid esters may also be utilized for increased release of sweeteners including for instance the so-called highly potent sweeteners, such as for instance saccharin, cyclamate, aspartame, thaumatin, dihydrocalcones, stevioside, glycyrrhizin or salts or compounds thereof. For increased released of sweetener, the sucrose fatty acids preferably have a content of palmitate of at least 40% such as at least 50%.

Further examples of active agents are medicines of any type.

Examples of active agents in the form of medicines include caffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov.85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH.RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen^{®}, Sildenafil citrate and derivatives thereof.

Dental products include Carbamide, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B12, Folic acid, niacin, Pantothensyre, biotine, C, D, E, K. Minerals include Calcium, phosphor, magnesium, iron, Zink, Cupper, lod, Mangan, Crom, Selene, Molybden. Other active ingredients include: Q10^{®}, enzymes. Natural drugs including Ginkgo Biloba, ginger and fish oil.

The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid. In a preferred embodiment, the invention relates to the release of Nicotine and its salts.

The above-mentioned active ingredients and/or flavors may be pre-mixed into the gum base.

When the gum base granules comprise pre-mixed active ingredients, a controlled release of active ingredients may be obtained by means of at least a double active ingredients buffer, the first buffer comprising active ingredients blended into the final mix immediately prior to compression, the second buffer comprising active ingredients blended into the gum base prior to the blending of gum base and gum base additives.

Generally, release of flavor and/or active ingredients may be adjusted by adjustment of the balance between pre-mixed ingredients and the chewing gum additives added prior to compression.

The degree of sieving depends primarily on how the gum base granulate(s) "reacts" when chewing gum additives are blended together.

If suitable, an initial pre-forming of the granulates are supplemented by spraying the barrier layer at the surface or at least a part of the surface of the pre-formed granulates. This technique and variants thereof may be referred to as an explicit barrier layer depositing.

However, preferably, the barrier layer is established in a more implicit way. This technique and variants thereof may be referred to as implicit barrier layer depositing. This technique implies that the barrier layer compound is sprayed or deposited initially on the contacting surfaces of the pressing tools of a compression machine.

An applicable technique suitable for implicit-barrier layer depositing is disclosed in US patent 5,643,630.

The grinded blend is applied to the pressing tools of a tableting machine and compressed into chewing gum tablets.

The applied barrier layer may comprise e.g. lubricants, anti-adherents and glidants.

Magnesium stearate may e.g. be applied as a pulverized parting compound.

The barrier layer may be added to the final tablet for example by depositing dosed quantities of pulverized lubricants and parting compounds on the material contacting surfaces of pressing tools of tableting machines.

The barrier layer may be established by means of for example metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

Optionally, the tableted chewing gum is provided with a suitable coating.

In accordance with an embodiment the invention, the chewing gum element comprises about 5% to about 98% by weight of the complete weight of the coated chewing gum. In the present context, a suitable outer coating is any coating that results in an extended storage stability of the compressed chewing gum products as defined above, relative to a chewing gum of the same composition that is not coated. Thus, suitable coating types include hard coatings, film coatings and soft coatings of any composition including those currently used in coating of chewing gum, pharmaceutical products and confectioneries.

According to a preferred embodiment of the invention, film coating is applied to the compressed chewing gum tablet.

One presently preferred outer coating type is a hard coating, which term is used in the conventional meaning of that term including sugar coatings and sugar-free (or sugarless) coatings and combinations thereof. The objects of hard coating are to obtain a sweet, crunchy layer, which is appreciated by the consumer, and to protect the gum centers for various reasons. In a typical process of providing the chewing gum centers with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colors, etc. In the present context, the sugar coating may contain further functional or active compounds including flavor compounds, pharmaceutically active compounds and/or polymer degrading substances.

In the production of chewing gum it may, however, be preferred to replace the cariogenic sugar compounds in the coating by other, preferably crystallizable, sweetening compounds that do not have a cariogenic effect. In the art such coating is generally referred to as sugarless or sugar-free coatings. Presently preferred non-cariogenic hard coating substances include polyols, e.g. sorbitol, maltitol, mannitol, xylitol, erythritol, lactitol, isomalt and tagatose which are obtained by industrial methods by hydrogenation of D-glucose, maltose, fructose or levulose, xylose, erythrose, lactose, isomaltulose and D-galactose, respectively.

In a typical hard coating process, as it will be described in details in the following, a syrup containing crystallizable sugar and/or polyol is applied onto the gum centers and the water it contains is evaporated off by blowing with warm, dry air. This cycle must be repeated several times, typically 10 to 80 times, in order to reach the swelling required. The term "swelling" refers to the increase in weight of the products, as considered at the end of the coating operation by comparison with the beginning, and in relation to the final weight of the coated products. In accordance with the present invention, the coating layer constitutes about 1 to about 75% by weight of the finished chewing gum element, such as about 10 to about 60% by weight, including about 15 to about 50% by weight.

In further useful embodiments of the invention, the outer coating of the chewing gum element is an element that is subjected to a film coating process and which therefore comprises one or more film-forming polymeric agents and optionally one or more auxiliary compounds, e.g. plasticizers, pigments and opacifiers. A film coating is a thin polymer-based coating applied to a chewing gum center of any of the above forms. The thickness of such a coating is usually between 20 and 100 µm. Generally, the film coating is obtained by passing the chewing gum centers through a spray zone with atomized droplets of the coating materials in a suitable aqueous or organic solvent vehicle, after which the material adhering to the gum centers is dried before the next portion of coating is received. This cycle is repeated until the coating is complete.

In the present context, suitable film-coating polymers include edible cellulose derivatives such as cellulose ethers including methylcellulose (MC), hydroxyethyl cellulose (HEC), hydroxypropyl cellulose (HPC) and hydroxypropyl methylcellulose (HPMC). Other useful film-coating agents are acrylic polymers and copolymers, e.g. methylacrylate aminoester copolymer or mixtures of cellulose derivatives and acrylic polymers. A particular group of film-coating polymers also referred to, as functional polymers are polymers that, in addition to its film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers includes: cellulose acetate phtalate (CAP), polyvinyl acetate phtalate (PVAP), shellac, metacrylic acid copolymers, cellulose acetate trimellitate (CAT) and HPMC. It will be appreciated that the outer film coating according to the present invention may comprise any combination of the above film-coating polymers.

In other embodiments of the invention, the film-coating layer of the chewing gum elements comprise a plasticizing agent having the capacity to alter the physical properties of a polymer to render it more useful in performing its function as a film-forming material. In general, the effect of plasticizers will be to make the polymer softer and more pliable as the plasticizer molecules interpose themselves between the individual polymer strands thus breaking down polymer-polymer interactions. Most plasticizers used in film coating are either amorphous or have very little crystallinity. In the present context, suitable plasticizers include polyols such as glycerol, propylene glycol, polyethylene glycol, e.g. the 200-6000 grades hereof, organic esters such as phtalate esters, dibutyl sebacate, citrate esters and thiacetin, oils/glycerides including castor oil, acetylated monoglycerides and fractionated coconut oil.

The choice of film-forming polymer(s) and plasticizing agent(s) for the outer coating of the present chewing gum element is made with due consideration for achieving the best possible barrier properties of the coating in respect of dissolution and diffusion across the film of moisture and gasses.

The film coating of the chewing gum elements may also contain one or more colorants or opacifiers. In addition to providing a desired color hue, such agents may contribute to protecting the compressed gum base against pre-chewing reactions, in particular by forming a barrier against moisture and gasses. Suitable colorants/pacifiers include organic dyes and their lakes, inorganic coloring agents, e.g. titanium oxide and natural colors such as e.g. β-carotene.

Additionally, film coatings may contain one or several auxiliary substances such as flavors and waxes or saccharide compounds such as polydextrose, dextrins including maltodextrin, lactose, modified starch, a protein such as gelatine or zein, a vegetable gum and any combination thereof.

It is also an aspect of the present invention that the outer coating of the chewing gum element can contain one or more pharmaceutically or cosmetically components including those mentioned hereinbefore.

Accordingly, in further embodiments of the invention, the above hard-coated or film-coated chewing gum element is an element where the outer coating comprises at least one additive component selected from a binding agent, a moisture absorbing component, a film forming agent, a dispersing agent, an anti-sticking component, a bulking agent, a flavoring agent, a coloring agent, a pharmaceutically or cosmetically active component, a lipid component, a wax component, a sugar and an acid. If it is desired to defer the effect of any of these additive components in the outer coating until mastication of the chewing gum, such components may, in accordance with the invention be encapsulated using any conventional encapsulation agent such as e.g. a protein including gelatine and soy protein, a cellulose derivative including any of those mentioned above, a starch derivative, edible synthetic polymers and lipid substances, the latter optionally in the form of liposome encapsulation.

In other embodiments of the invention, the chewing gum element is provided with an outer coating in the form generally described in the art as a soft coating. Such soft coatings are applied using conventional methods and may advantageously consist of a mixture of a sugar or any of the above non-cariogenic, sugar-less sweetening compounds and a starch hydrolysate.

Again, it should be noted that the above-described coating is optional or that it may be postponed until it fits into the last part of the manufacturing process due to the fact that the applied barrier layer is also acting as a complete or at least a partial barrier to transfer of humidity from the environment into the tablet.

Compared to conventionally mixed chewing gum, the compression of a gum base granulate together with chewing gum additives is a relatively lenient gathering of the final chewing gum, at least with respect to temperature. However, the omission of the thoroughly tearing of the granulate together with the desired additives will, according to conventional chewing gum, result in a risk of crumbling and disintegration especially during the initial chew.

According to the invention, the provided chewing gum featuring tacky granules may counteract the initial-chew invoked disintegration to such a degree that the chewing gum remains non-crumbling until the granules are finally mixed during the chewing of the chewing gum.

## Claims

1. Gum base granules comprising at least one biodegradable gum base polymer
wherein the gum base has a water content of less than 5.0% by weight of the gum base.

2. Gum base granules according to claim 1,
wherein said gum base comprises solely at least one biodegradable polymer.

3. Gum base granules according to claim 1 or 2,
wherein at least one of said biodegradable polymers comprises a polyester produced through reaction of at least one alcohol or derivative thereof and at least one acid or derivative thereof.

4. Gum base granules according to any of the claims 1 to 3,
wherein at least one of said biodegradable elastomers comprises said polyester obtained by polymerization of at least one cyclic ester.

5. Gum base granules according to any of the claims 1 to 4,
wherein the gum base has a water content of less than 1.5% by weight of the gum base.

6. Gum base granules according to any of the claims 1 to 5,
wherein the gum base has a water content of less than 1.0%, preferably 0% by weight of the gum base.

7. Gum base granules according to any of the claims 1 to 6,
wherein the size of the gum base granules are within the range of 0.01mm · 0.01 mm to 2mem · 2mm, preferably within the range of 0.1mm 0.1 mm to 1.0 mm · 1.0mm.

8. Gum base granules according to any of the claims 1 to 7,
at least one biodegradable polymer in the amount of 1% to 100% by weight of the gum base.

9. Gum base granules according to any of the claims 1 to 8,
wherein said granulated gum base comprising at least one high molecular weight elastomeric biodegradable polymer in an amount of 0% to 75% by weight of said gum base.

10. Gum base granules according to any of the claims 1 to 9,
wherein the molecular weight of said at least one high molecular weight elastomeric biodegradable polymer is from 10000 g/mol to 800000 g/mol Mn.

11. Gum base granules according to any of the claims 1 to 10,
wherein said granulated gum base comprising at least one low molecular weight elastomer solvent in an amount of 0% to 90% by weight of said gum base.

12. Gum base granules according to any of the claims 1 to 11,
wherein the molecular weight of said at least one low molecular weight elastomer solvent is from 1000 g/mol to 50000 g/mol Mn.

13. Gum base granules according to any of the claims 1 to 12,
wherein gum base granules comprises sweetener in an amount of less than 50% by weight.

14. Gum base granules according to any of the claims 1 to 13,
wherein the gum base is free of lubricants, anti-adherents and glidants.

15. Gum base granules according to any of the claims 1 to 14,
wherein the natural resins provide an improved and sticky texture of the gum base when applied in chewing gum formulation.

16. Gum base granules according to any of the claims 1 to 15,
wherein said gum base is wax free.

17. Gum base granules according to any of the claims 1 to 16,
wherein said gum base is fat free.

18. Gum base granules according to any of the claims 1 to 17,
wherein said gum base comprises filler in an amount of 0% to 50% by weight of the gum base.

19. Gum base granules according to any of the claims 1 to 18,
wherein said gum base granules comprise active ingredients, at least a part of said active ingredients been torn into the chewing gum forming granules or at least a part of the chewing gum forming granules previous to compression.

20. Gum base granules according to any of the claims 1 to 19,
wherein said gum base comprises synthetic resin in an amount of 15% to 99%, preferably 15% to 80% by weight of the gum base.

21. Gum base granules according to any of the claims 1 to 20,
wherein said gum base comprises emulsifiers and/or fats in an amount of 10% to 40% by weight of the gum base.

22. Gum base granules according to any of the claims 1 to 21,
wherein said gum base comprises wax in an amount of 2% to 30% by weight of the gum base.

23. Gum base granules according to any of the claims 1 to 22,
wherein at least a part of the flavoring agents has been torn into the gum base or at least a part of the gum base previous to compression.

24. Gum base granules according to any of the claims 1 to 23,
wherein said at least one biodegradable polymer comprises at least one polyester obtained by polymerization of at least one compound selected from the group consisting of cyclic esters, alcohols or derivatives thereof and carboxylic acids or derivatives thereof.

25. Gum base granules according to any of the claims 1 to 24,
wherein said gum base granules comprise at least one non-biodegradable polymer.

26. Compressed chewing gum comprising gum base according to any of the claims 1 to 25 wherein the water content is less than 5.0% by weight of the gum base.

27. Compressed chewing gum according to claim 26,
wherein at least a part of said chewing gum polymers are non-biodegradable.

28. Compressed chewing gum according to claim 26 or 27,
wherein said chewing gum granules are blended and compressed together with chewing gum ingredients, preferably powdered chewing gum ingredients, such as sweetener, flavor, fillers and emulsifiers.

29. Compressed chewing gum according to any of the claims 26 to 28,
wherein the water content is less than 1.5% by weight of the gum base.

30. Compressed chewing gum according to any of the claims 26 to 28,
wherein the water content is 0%.

31. Compressed chewing gum according to any of the claims 26 to 30,
wherein said biodegradable gum base comprises at least two biodegradable polymers.

32. Compressed chewing gum according to any of the claims 26 to 31,
wherein said biodegradable gum base granules are used together with conventional non-biodegradable gum base granules.

## Patentansprüche

1. Gummibasis-Granulat, umfassend mindestens ein bioabbaubares Gummibasis-Polymer, bei dem die Gummibasis einen Wassergehalt von weniger als 5,0 Gew.-% der Gummibasis aufweist.

2. Gummibasis-Granulat nach Anspruch 1,
bei dem die Gummibasis nur mindestens ein bioabbaubares Polymer umfasst.

3. Gummibasis-Granulat nach Anspruch 1 oder 2,
bei dem mindestens eines der bioabbaubaren Polymere einen Polyester umfasst, der durch die Umsetzung mindestens eines Alkohols oder Derivats desselben und mindestens einer Säure oder eines Derivats derselben hergestellt ist.

4. Gummibasis-Granulat nach irgendeinem der Ansprüche 1 bis 3,
bei dem mindestens eines der bioabbaubaren Elastomere einen Polyester umfasst, der durch Polymerisation mindestens eines cyclischen Esters erhalten wurde.

5. Gummibasis-Granulat nach irgendeinem der Ansprüche 1 bis 4,
bei dem die Gummibasis einen Wassergehalt von weniger als 1,5 Gew.-% der Gummibasis aufweist.

6. Gummibasis-Granulat nach irgendeinem der Ansprüche 1 bis 5,
bei dem die Gummibasis einen Wassergehalt von weniger als 1,0 Gew.-%, bevorzugt 0 Gew.-% der Gummibasis aufweist.

7. Gummibasis-Granulat nach irgendeinem der Ansprüche 1 bis 6,
bei dem die Größe der Gummibasis-Körnchen im Bereich von 0,01 mm.0,01 mm bis 2 mm·2 mm, bevorzugt im Bereich von 0,1 mm·0,1 mm bis 1,0 mm·1,0 mm liegt.

8. Gummibasis-Granulat nach irgendeinem der Ansprüche 1 bis 7,
mindestens ein bioabbaubares Polymer in einer Menge von 1 bis 100 Gew.-% der Gummibasis.

9. Gummibasis-Granulat nach irgendeinem der Ansprüche 1 bis 8,
wobei die granulierte Gummibasis mindestens ein elastomeres bioabbaubares Polymer mit hohem Molekulargewicht in einer Menge von 0 bis 75 Gew.-% der Gummibasis umfasst.

10. Gummibasis-Granulat nach irgendeinem der Ansprüche 1 bis 9,
bei dem das Molekulargewicht des mindestens einen elastomeren bioabbaubaren Polymers mit hohem Molekulargewicht 10.000 g/Mol bis 800.000 g/Mol Mn beträgt.

11. Gummibasis-Granulat nach irgendeinem der Ansprüche 1 bis 10,
bei dem die granulierte Gummibasis mindestens ein Elastomer-Lösungsmittel mit niedrigem Molekulargewicht in einer Menge von 0 bis 90 Gew.-% der Gummibasis umfasst.

12. Gummibasis-Granulat nach irgendeinem der Ansprüche 1 bis 11,
bei dem das Molekulargewicht des mindestens einen Elastomer-Lösungsmittels mit niedrigem Molekulargewicht 1.000 g/Mol bis 50.000 g/Mol Mn beträgt.

13. Gummibasis-Granulat nach irgendeinem der Ansprüche 1 bis 12,
bei dem das Gummibasis-Granulat Süßungsmittel in einer Menge von weniger als 50 Gew.-% umfasst.

14. Gummibasis-Granulat nach irgendeinem der Ansprüche 1 bis 13,
bei dem die Gummibasis frei von Schmiermitteln, Antiklebrigkeitsmitteln und Gleitmitteln ist.

15. Gummibasis-Granulat nach irgendeinem der Ansprüche 1 bis 14,
bei dem die Naturharze für eine verbesserte und klebrige Struktur der Gummibasis sorgen, wenn sie in einer Kaugummiformulierung verwendet werden.

16. Gummibasis-Granulat nach irgendeinem der Ansprüche 1 bis 15,
bei dem die Gummibasis wachsfrei ist.

17. Gummibasis-Granulat nach irgendeinem der Ansprüche 1 bis 16,
bei dem die Gummibasis fettfrei ist.

18. Gummibasis-Granulat nach irgendeinem der Ansprüche 1 bis 17,
bei dem die Gummibasis Füllstoff in einer Menge von 0 bis 50 Gew.-% der Gummibasis umfasst.

19. Gummibasis-Granulat nach irgendeinem der Ansprüche 1 bis 18,
bei dem das Gummibasis-Granulat aktive Bestandteile umfasst, wobei mindestens ein Teil der aktiven Bestandteile vor der Kompression in die den Kaugummi bildenden Körnchen oder zumindest einen Teil der Kaugummibildenden Körnchen gerissen worden ist.

20. Gummibasis-Granulat nach irgendeinem der Ansprüche 1 bis 19,
bei dem die Gummibasis synthetisches Harz in einer Menge von 15 bis 99 Gew.-%, bevorzugt 15 bis 80 Gew.-% der Gummibasis umfasst.

21. Gummibasis-Granulat nach irgendeinem der Ansprüche 1 bis 20,
bei dem die Gummibasis Emulgatoren und/oder Fette in einer Menge von 10 bis 40 Gew.-% der Gummibasis umfasst.

22. Gummibasis-Granulat nach irgendeinem der Ansprüche 1 bis 21,
bei dem die Gummibasis Wachs in einer Menge von 2 bis 30 Gew.-% der Gummibasis umfasst.

23. Gummibasis-Granulat nach irgendeinem der Ansprüche 1 bis 22,
bei dem mindestens ein Teil der Geschmacksmittel vor der Kompression in die Gummibasis oder zumindest einen Teil der Gummibasis gerissen worden ist.

24. Gummibasis-Granulat nach irgendeinem der Ansprüche 1 bis 23,
bei dem das mindestens eine bioabbaubare Polymer mindestens einen Polyester umfasst, der durch Polymerisation mindestens einer Verbindung erhalten worden ist, die ausgewählt ist aus der Gruppe bestehend aus cyclischen Estern, Alkoholen oder Derivaten derselben und Carbonsäuren oder Derivaten derselben.

25. Gummibasis-Granulat nach irgendeinem der Ansprüche 1 bis 24,
bei dem das Gummibasis-Granulat mindestens ein nicht-bioabbaubares Polymer umfasst.

26. Komprimierter Kaugummi, umfassend Gummibasis nach irgendeinem der Ansprüche 1 bis 25, wobei der Wassergehalt weniger als 5,0 Gew.-% der Gummibasis beträgt.

27. Komprimierter Kaugummi nach Anspruch 26, bei dem mindestens ein Teil der Kaugummi-Polymere nicht-bioabbaubar ist.

28. Komprimierter Kaugummi nach Anspruch 26 oder 27,
bei dem das Kaugummi-Granulat zusammen mit Kaugummi-Bestandteilen, bevorzugt pulverförmigen Kaugummi-Bestandteilen, wie Süßungsmittel, Geschmacksstoff, Füllstoffen und Emulgatoren, zusammengemischt und komprimiert wird.

29. Komprimierter Kaugummi nach irgendeinem der Ansprüche 26 bis 28, bei dem der Wassergehalt weniger als 1,5 Gew.-% der Gummibasis beträgt.

30. Komprimierter Kaugummi nach irgendeinem der Ansprüche 26 bis 28, bei dem der Wassergehalt 0 % ist.

31. Komprimierter Kaugummi nach irgendeinem der Ansprüche 26 bis 30,
bei dem die bioabbaubare Gummibasis mindestens zwei bioabbaubare Polymere umfasst.

32. Komprimierter Kaugummi nach irgendeinem der Ansprüche 26 bis 31,
bei dem das bioabbaubare Gummibasis-Granulat zusammen mit herkömmlichem nicht-bioabbaubarem Gummibasis-Granulat verwendet wird.

## Revendications

1. Granules de base de gomme qui comprennent au moins un polymère de base de gomme biodégradable, la base de gomme ayant une teneur en eau inférieure à 5,0 % en poids de la base de gomme.

2. Granules de base de gomme selon la revendication 1,
ladite base de gomme comprenant uniquement au moins un polymère biodégradable.

3. Granules de base de gomme selon la revendication 1 ou 2,
au moins un desdits polymères biodégradables comprenant un polyester produit par réaction d'au moins un alcool ou un dérivé de celui-ci et d'au moins un acide ou un dérivé de celui-ci.

4. Granules de base de gomme selon l'une quelconque des revendications 1 à 3,
au moins un desdits élastomères biodégradables comprenant ledit polyester obtenu par polymérisation d'au moins un ester cyclique.

5. Granules de base de gomme selon l'une quelconque des revendications 1 à 4,
la base de gomme ayant une teneur en eau inférieure à 1,5 % en poids de la base de gomme.

6. Granules de base de gomme selon l'une quelconque des revendications 1 à 5,
la base de gomme ayant une teneur en eau inférieure à 1,0 %, de préférence de 0 % en poids de la base de gomme.

7. Granules de base de gomme selon l'une quelconque des revendications 1 à 6,
la dimension des granules de base de gomme se trouvant dans la plage de 0,01 mm . 0,01 mm à 2 mm . 2 mm, de préférence dans la plage de 0,1 mm . 0,1 mm à 1,0 mm . 1,0 mm.

8. Granules de base de gomme selon l'une quelconque des revendications 1 à 7,
comprenant au moins un polymère biodégradable en la quantité de 1 % à 100 % en poids de la base de gomme.

9. Granules de base de gomme selon l'une quelconque des revendications 1 à 8,
ladite base de gomme granulée comprenant au moins un polymère élastomère biodégradable de masse moléculaire élevée en une quantité de 0 % à 75 % en poids de ladite base de gomme.

10. Granules de base de gomme selon l'une quelconque des revendications 1 à 9,
la masse moléculaire dudit ou desdits polymères élastomères biodégradables de masse moléculaire élevée étant de 10 000 g/mol à 800 000 g/mol Mn.

11. Granules de base de gomme selon l'une quelconque des revendications 1 à 10,
ladite base de gomme granulée comprenant au moins un solvant élastomère de faible masse moléculaire en une quantité de 0 % à 90 % en poids de ladite base de gomme.

12. Granules de base de gomme selon l'une quelconque des revendications 1 à 11,
la masse moléculaire dudit ou desdits solvant élastomères de faible masse moléculaire étant de 1 000 g/mol à 50 000 g/mol Mn.

13. Granules de base de gomme selon l'une quelconque des revendications 1 à 12,
les granules de base de gomme comprenant un édulcorant en une quantité inférieure à 50 % en poids.

14. Granules de base de gomme selon l'une quelconque des revendications 1 à 13,
la base de gomme ne comprenant pas de lubrifiants, d'anti-adhérents et d'agents de plissement.

15. Granules de base de gomme selon l'une quelconque des revendications 1 à 14,
les résines naturelles fournissant une texture améliorée et collante de la base de gomme lorsqu'elles sont appliquées dans une formulation de chewing-gum.

16. Granules de base de gomme selon l'une quelconque des revendications 1 à 15,
ladite base de gomme ne contenant pas de cire.

17. Granules de base de gomme selon l'une quelconque des revendications 1 à 16,
ladite base de gomme ne contenant pas de graisse.

18. Granules de base de gomme selon l'une quelconque des revendications 1 à 17,
ladite base de gomme comprenant une charge en une quantité de 0 % à 50 % en poids de la base de gomme.

19. Granules de base de gomme selon l'une quelconque des revendications 1 à 18,
lesdits granules de base de gomme comprenant des ingrédients actifs, au moins une partie desdits ingrédients actifs étant déchiquetés dans les granules formant le chewing-gum ou au moins une partie des granules formant le chewing-gum avant la compression.

20. Granules de base de gomme selon l'une quelconque des revendications 1 à 19,
ladite base de gomme comprenant une résine synthétique en une quantité de 15 % à 99 %, de préférence de 15 % à 80 % en poids de la base de gomme.

21. Granules de base de gomme selon l'une quelconque des revendications 1 à 20,
la base de gomme comprenant des émulsifiants et/ou des graisses en une quantité de 10 % à 40 % en poids de la base de gomme.

22. Granules de base de gomme selon l'une quelconque des revendications 1 à 21,
ladite base de gomme comprenant une cire en une quantité de 2 % à 30 % en poids de la base de gomme.

23. Granules de base de gomme selon l'une quelconque des revendications 1 à 22,
au moins une partie des agents aromatisants ayant été déchiquetés dans la base de gomme ou au moins une partie de la base de gomme avant la compression.

24. Granules de base de gomme selon l'une quelconque des revendications 1 à 23,
ledit ou lesdits polymères biodégradables comprenant au moins un polyester obtenu par polymérisation d'au moins un composé choisi dans le groupe constitué par les esters cycliques, les alcools ou leurs dérivés et les acides carboxyliques ou leurs dérivés.

25. Granules de base de gomme selon l'une quelconque des revendications 1 à 24,
lesdits granules de base de gomme comprenant au moins un polymère non biodégradable.

26. Chewing-gum comprimé comprenant une base de gomme selon l'une quelconque des revendications 1 à 25,
la teneur en eau étant inférieure à 5,0 % en poids de la base de gomme.

27. Chewing-gum comprimé selon la revendication 26,
au moins une partie desdits polymères de chewing-gum étant non biodégradables.

28. Chewing-gum comprimé selon la revendication 26 ou 27,
lesdits granules de chewing-gum étant mélangés et comprimés avec les ingrédients pour chewing-gum, de préférence les ingrédients pulvérulents pour chewing-gum, tels que les édulcorants, un agent aromatisant, les charges et les émulsifiants.

29. Chewing-gum comprimé selon l'une quelconque des revendications 26 à 28,
la teneur en eau étant inférieure à 1,5 % en poids de la base de gomme.

30. Chewing-gum comprimé selon l'une quelconque des revendications 26 à 28,
la teneur en eau étant de 0 %.

31. Chewing-gum comprimé selon l'une quelconque des revendications 26 à 30,
ladite base de gomme biodégradable comprenant au moins deux polymères biodégradables.

32. Chewing-gum comprimé selon l'une quelconque des revendications 26 à 31, lesdits granules de base de gomme biodégradables étant utilisés conjointement à des granules de base de gomme non dégradables, conventionnels.
